# EUROPEAN PATENT APPLICATION

(11) **EP 3 571 936 A1**
(43) Date of publication of application: **27.11.2019**
(21) Application number: 17893001.2
(22) Date of filing: 18.12.2017
(51) Int. Cl.: A23N 1/02, A47J 19/02, A47J 19/06, A47J 31/44

(54) **LARGE-CAPACITY JUICING MACHINE**

(30) Priority: 19.01.2017 KR 20170009073
(71) Applicant: Lee, Mun Hyun, Nonsan-si, Chungcheongnam-do 33026 (KR)
(72) Inventor: Lee, Mun Hyun, Nonsan-si, Chungcheongnam-do 33026 (KR)
(74) Representative: AOMB Polska Sp. z.o.o.
(86) International application number: PCT/KR2017/014903
(87) International publication number: WO 2018/135762

(57) **Abstract**

The present invention relates to a high-capacity juicing machine including: a base (210); a first support (230) and a second support (250) which are provided on the base (210) and are spaced from each other in a longitudinal direction; a first juicing member (270) having a first support shaft (275) rotatably provided on the first support (230) and an outer hollow rotor (271) which is positioned between the first support (230) and the second support (250), which is opened toward the second support (250), which is provided with a plurality of discharge holes (2711), and which is coupled to the first support shaft (275) to rotate together with the first support shaft; a second juicing member (290) having a second support shaft (293) rotatably provided on the second support (250) to be eccentric from the first support shaft (275), and an inner rotor (291) which is eccentrically positioned inside the first juicing member (270), and which is coupled to the second support shaft (293) to rotate together with the second support shaft; a first driving member (240) for driving the first support shaft (275); and a second driving member (260) for driving the second support shaft (293). The high-capacity juicing machine has a simple structure to be easily fabricated. Circumferential velocities of the first and second juicing members are controlled separately such that circumferential velocities of the first and second juicing members can be easily adjusted easily. The high-capacity juicing machine has an improved juicing performance.

## Description

### [Technical Field]

The present invention relates to a high-capacity juicing machine having a simple structure to improve juicing performance.

### [Background Art]

In general, a juicing machine is a kind of extractor that compresses and extracts materials (hereinafter referred to as a juiced material), such as various vegetables or fruits.

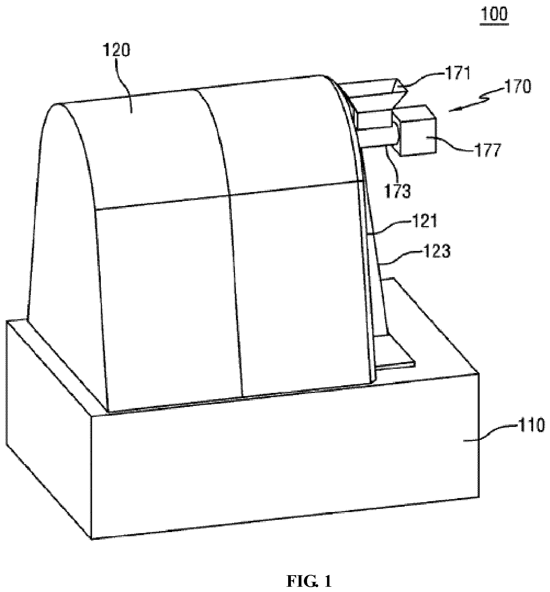

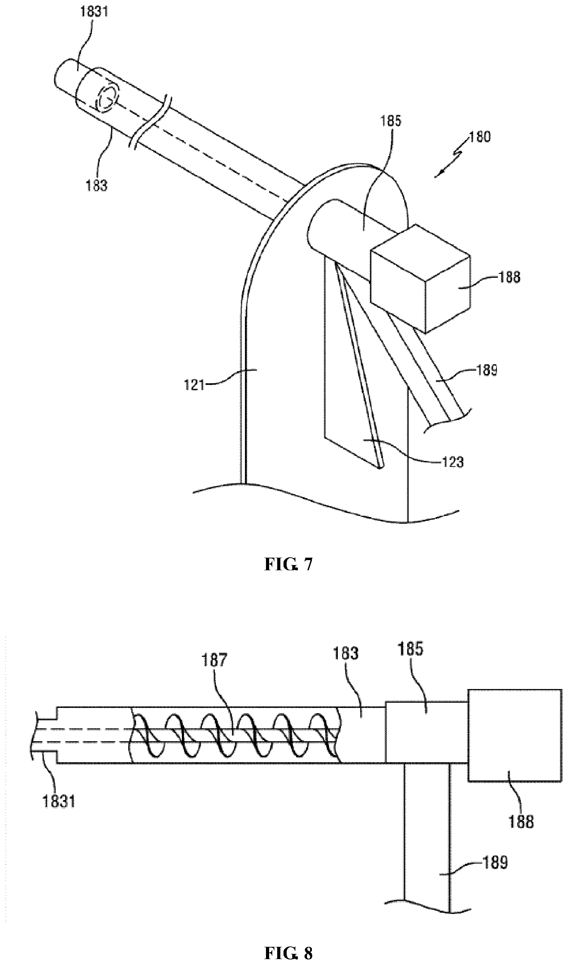

As illustrated in Figs. 1 to 8, a juicing machine according to the related art includes a base 110 serving as a support, a support unit 130 fixed to the base 110, a juicing unit 150 rotatably provided to the support unit 130, an introducing unit 170 for supplying the juiced material to the juicing unit 150, a discharge unit 180 for discharging residues from the juicing unit 150, and a driving unit 140 for rotating the juicing unit 150. Parts of the above components are housed by a housing 120.

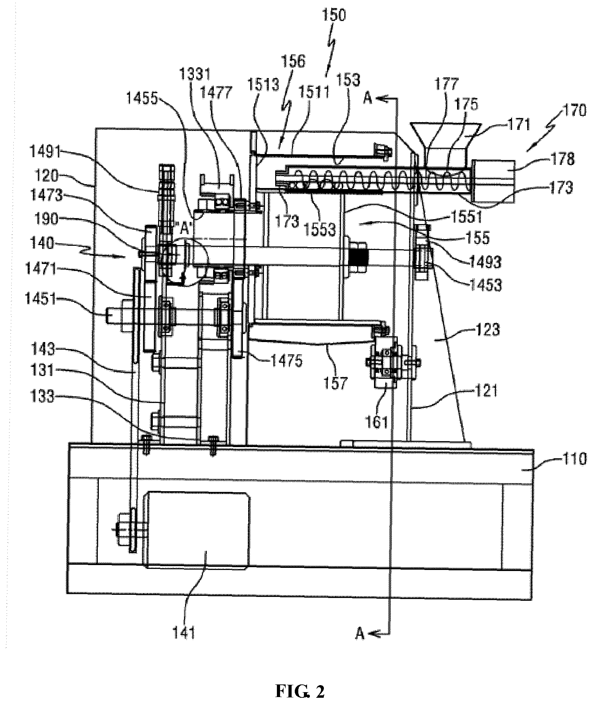

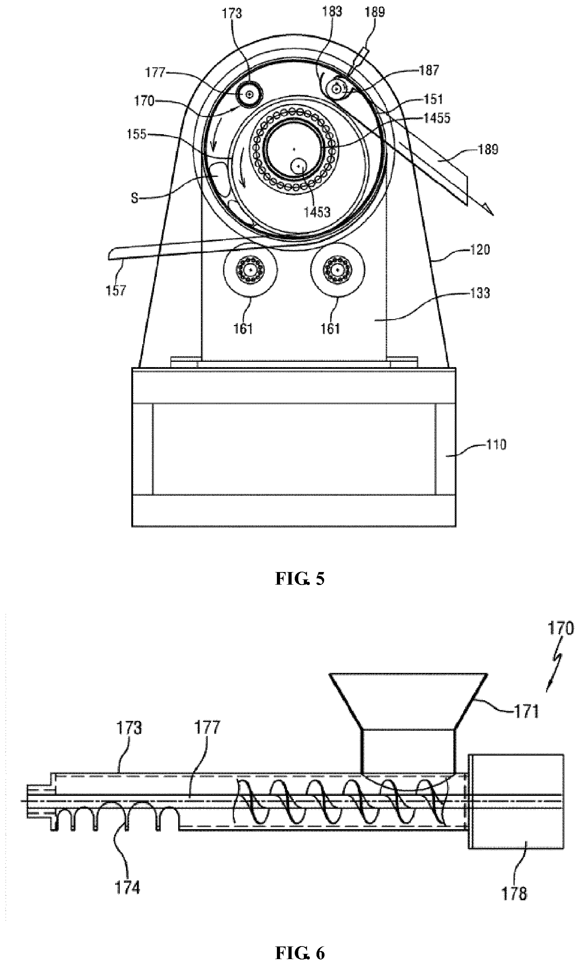

As illustrated in Figs. 2 and 5, the juicing unit 150 has a first juicing member 151 and a second juicing member 155 positioned inside the first juicing member 151. The first juicing member 151 is connected to a third shaft 1455 to be rotatably driven, while the second juicing member 155 is connected to a second shaft 1453 to be rotatably driven. The third shaft 145 which is a rotation shaft of the first juicing member 150 and the second shaft 1453 which is a rotation shaft of the second juicing member 155 are eccentrically installed.

The support unit 130 has a first support 131, a second support 133 and a third support 121 which are spaced apart from each other in a longitudinal direction on the base 110. The first support 131 and the third support 121 are provided at both sides of the second support 133 in the longitudinal direction. The third support 121 may serve as a cover to close an opening formed at one side of the housing 120. The support unit may also have at least one reinforcing support 123 fixed to the base at a lower end thereof and connected to of the side of the third support 121 so as to reinforce and support the third support 121.

The support unit 130 rotatably supports the first shaft 1451, the second shaft 1453 and the third shaft 1455 via a bearing.

The first juicing member 151 has a first cylindrical portion 1511 and a first annular portion 1513 connected to the first cylindrical portion 1511 to support the first cylindrical portion 1511 in a radial direction. The first annular portion 1513 is coupled to the third shaft 1455 which is rotatably installed to the second support 133 via a bearing. The third shaft 1455 extends from the first annular portion 1513 in a direction opposite to the first cylindrical portion 1511. The first juicing member 151 is supported in the radial direction by connecting the first annular portion 1513 with the third shaft 1455 at one side of the first juicing member 151 in the longitudinal direction. The other side of the first cylindrical portion 1511 of the first juicing member 151 is radially supported by at least one support roller 161 which is rotatably installed to the third support 121. The support roller 161 protrudes from the third support 121 toward the first cylindrical portion 1511 to rotatably support the first cylindrical portion 1511. The other end of the first cylindrical portion 1511 is provided with a support ring 1515, and the support ring 1515 comes into contact with the support roller 161 in a rotatable manner, thereby supporting the first cylindrical portion 1511. As illustrated in Fig. 5, the support roller 161 is provided to the third support 121 so that the support roller 161 comes into contact with the outer surface of the lower portion of the first cylindrical portion 1511. The third shaft 1455 is a hollow body, and the first juicing member 151 is opened toward the right side in the longitudinal direction.

One side of the second shaft 1453 which is the rotation shaft of the second juicing member 155 is rotatably supported by the first support 131 via a bearing, while the other side is rotatably supported by the third support 121 via a bearing. The second shaft 1453 penetrates through an inner portion of the third hollow shaft 1455, and as illustrated in Figs. 2 and 5, the second shaft 1453 is eccentric from the center of the third shaft 1455 to which the first juicing member 151 is connected.

The second shaft 1453 is provided with the second juicing member 155 so that the second juicing member is rotated together with the second shaft 1453. The second juicing member 155 is positioned in the first juicing member 151. The second juicing member 155 has a second cylindrical portion 1553 and a plurality of second annular portions 1551 spaced apart from the second cylindrical portion 1553 in the longitudinal direction and connected to the second cylindrical portion 1553 along an outer diameter thereof. The second shaft portion 1453 is coupled to the second annular portions 1551 to rotate together with the second annular portions.

The second juicing member 155 is positioned in the first juicing member 151. The first cylindrical portion 1511 and the second cylindrical portion 1553 have an eccentrical center of rotation, so that the center of rotation is different from each other. As illustrated in Fig. 5, a gap between the first cylindrical portion 1511 and the second cylindrical portion 1553 is big at an upper portion, while the gap is small at a lower portion, so that the first cylindrical portion 1511 and the second cylindrical portion 1553 are installed with the different center of rotation. In Fig. 5 a reference numeral indicates the center of rotation of the first juicing member 151, and 1453s indicates the center of rotation of the second juicing member 155, in which the center of rotation of the second juicing member 155 is located at a position lower than that of the first juicing member 151, as illustrated in Fig. 5.

The juiced material is introduced through a big gap between the first cylindrical portion 1511 and the second cylindrical portion 1553, and the introduced juiced material is guided to a lower portion along a small gap by the gravity and the first juicing member 151 and the second juicing member 155 which are rotated in a direction indicated by an arrow in Fig. 5, so that the juiced material is extracted between the inner surface of the first cylindrical portion 1511 and the second cylindrical portion 1553.

The driving unit 140 has a motor 141, a first gear 1471 and a third gear 1475 which are engaged to the first shaft 1451, a second gear 1473 engaged to the second shaft 1453, and a fourth gear 1477 engaged to the third shaft 1455.

The motor 141 is installed to the base 110, and the second shaft 1453 and the third shaft 1455 are rotatably driven by the motor 141. A pulley is mounted to the shaft of the motor 141, and a pulley is mounted to a left end of the first shaft 1451 in the longitudinal direction. both pulleys are connected to each other by a belt 143, and rotation of the motor 141 is transferred to the first shaft 1451.

The first shaft 1451 is provided with a first gear 1471 at one side of the pulley, and a protruding portion of the second shaft 1453 which protrudes from the third shaft 1455 in a leftward direction when seen from the longitudinal direction is provided with a second gear 1473 which is meshed with the first gear 1471. A right end of the first shaft 1451 in the longitudinal direction is provided with a third gear 1475, and the third 1455 is provided with a fourth gear 1477 which is meshed with the third gear 1475.

When the motor 141 drives, the first shaft 1451 is rotated by the belt 143 and the pulley, the second shaft 1453 is rotated by engagement of the first gear 1471 and the second gear 1473, and the third shaft 1455 is rotated by engagement of the third gear 1475 and the fourth gear 1477. Thus, the second juicing member 155 connected to the second shaft 1453 and the first juicing member 151 connected to the third shaft 1455 are rotated. The first juicing member 151 and the second juicing member 155 are rotated in the direction indicated by the arrow in Fig. 5, and a gear ratio of the first to fourth gears 1471 to 1477 is adjusted to make a circumferential speed thereof equal.

As illustrated in Figs. 2 to 5, the juiced material is introduced between the first cylindrical portion 1511 of the first juicing member 151 and the second cylindrical portion 1553 of the second juicing member 155 through the introducing unit 170. After juicing, the residues left between the first cylindrical portion 1551 and the second cylindrical portion 1553 is discharged through the discharge unit 180. The introducing unit 170 and the discharge unit 180 are installed to the upper wide portion between the first cylindrical portion 1511 and the second cylindrical portion 1553.

The introducing unit 170 has a hollow introducing housing 173, a screw conveyor 177 rotatably provided in the introducing housing 173, and a hollow hopper 171 connected to the introducing housing 173 at an outwardly exposed position to communicate with the inside of the introducing housing 173, the hopper having a diameter gradually increased to an upward direction. The hopper 171 extends upwardly from the introducing housing 173. The introducing unit 170 is biased from an upper center to the rotational direction of the first and second juicing members 151 and 155.

Apart of the introducing housing 173 is positioned between the inner surface of the first cylindrical portion 1511 and the outer surface of the second cylindrical portion, and the remaining part is exposed outwardly from the first cylindrical portion 1511 of the first juicing member 151 in the longitudinal direction. The introducing housing 173 is fixed to the third support 121, of which a part is positioned at the left side of the third support 121 in the longitudinal direction, while the remaining part is positioned at the right side of the third support 121 in the longitudinal direction. The introducing hopper 171 is connected to the introducing housing 173 which is positioned at the right side of the third support 121. The right end of the introducing housing 173 may be provided with a driving member 178 to rotate the screw conveyor 177. The screw conveyor 177 is rotatably supported by the left end of the introducing housing 173 in the longitudinal direction. The introducing housing 173 positioned between the inner surface of the first cylindrical portion 1511 and the outer surface of the second cylindrical portion 1553 is provided with discharge holes 174 at a lower portion thereof.

If the juiced material is introduced into the hopper 171 while the driving member 178 is driving, the juiced material dropped into the introducing housing 173 through the hopper 171 is transferred to the left direction by the screw conveyor 177 rotating inside the introducing housing 173, and then is dropped between the inner surface of the first cylindrical portion 1511 and the outer surface of the second cylindrical portion 1553 through the discharge holes 174 formed at the introducing housing 173. While the dropped juiced material is guided to the narrow portion between the first cylindrical portion 1511 and the second cylindrical portion 1553, as illustrated in Fig. 5, the juiced material is extracted by the inner surface of the first cylindrical portion 1511 and the outer surface of the second cylindrical portion 1553.

As illustrated in Fig. 5, in case where the second juicing member 155 is downwardly biased, as the juiced material is transferred further down, the juiced material is extracted, and is pressed to the max at a center portion of a load. After the juiced material passes the center portion of the load, the pressing force applied to the juicing material is gradually decreased.

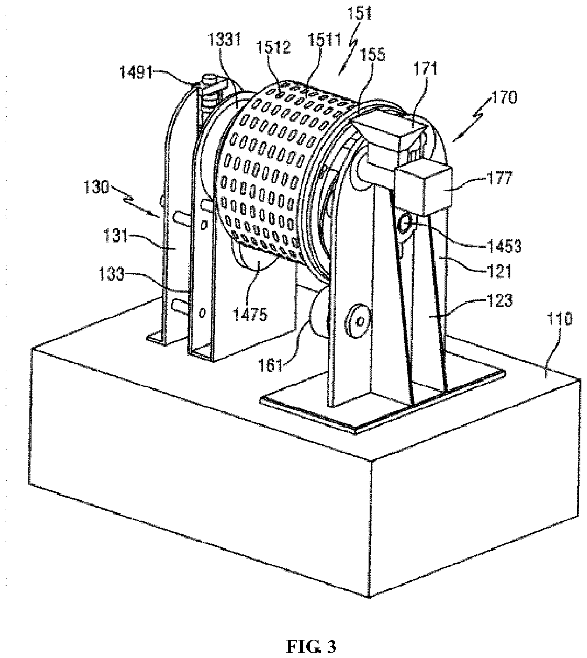

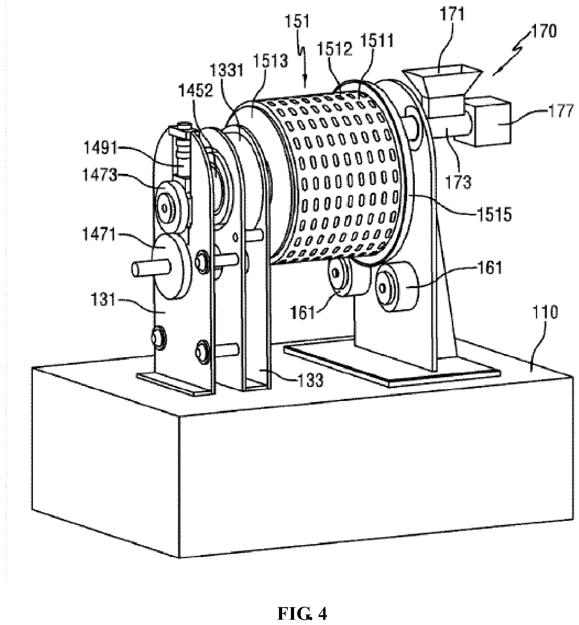

The first cylindrical portion 1511 of the first juicing member 151 is provided with a plurality of holes 1512, as illustrated in Figs. 3 and 4. The inner surface of the first cylindrical portion 1511 is provided with a screen 153 with a plurality of fine holes. The fine holes are sized in such a way that the juice extraction is discharged, but the juiced residues are not discharged.

The juice extraction produced by pressure of the first and second cylindrical portions 1511 and 1553 is discharged through the holes 1512 formed at the first cylindrical portion 1511 and the fine holes formed at the screen, while the juiced residues are partially or wholly attached to the inside of the screen 153 in case where the inside of the first cylindrical portion 1511 is provided with the screen 153. Accordingly, a separating member 189 for separating the juiced residues from the inside is provide outside the first cylindrical portion 1511 at a position spaced apart from the first cylindrical portion 1511. The separating member 189 injects a fluid in an inward direction from the outside of the first cylindrical portion 1511. The separating member 189 is a spray nozzle which is connected to a cooling cycle (not illustrated) provided to an air conditioner, thereby injecting a cold fluid (e.g., air) toward the first cylindrical portion 1511. The separating member 189 may be a spray nozzle with nozzle holes extending in the longitudinal direction of the first cylindrical portion 1511. The separating member injects the cold fluid, it is possible to prevent components of the juicing machine 100 from being oxidized.

The juice extraction produced from the juiced material is discharged from the first cylindrical portion 1511, and then is dropped and collected in a collection unit (not illustrated) by a guide unit 157 provided below the first cylindrical portion 1511. The guide unit 157 is positioned to be spaced apart from the lower portion of the first cylindrical portion 1511, and is inclined toward one side to guide the juice extraction dropped from the first cylindrical portion 1511, the guide unit having a sufficient size. The guide unit 157 is preferably formed to have a size larger than a projection area of the first cylindrical portion 1511.

The discharge unit 180 has a discharge housing member positioned and extending outwardly between the inner surface of the first cylindrical portion 1511 and the outer surface of the second cylindrical portion 1553, a discharge guide 189 communicating with the discharge housing member and extending downwardly from the discharge housing member, and a screw conveyor 187 rotatably provided in the discharge housing member. The discharge housing member has a discharge housing 183 with an annular cross section positioned between the inner surface of the first cylindrical portion 1511 and the outer surface of the second cylindrical portion 1553, and a first discharge housing 185 extending outwardly from the discharge housing 183 in the longitudinal direction of the first cylindrical portion 1511. The discharge housing 183 communicates with the first discharge housing 185. The discharge guide 189 extends downwardly from the first discharge housing 185.

The inner end of the screw conveyor 188 is rotatably supported by the discharge housing 183, and the outer end is rotatably supported by the first discharge housing 185. The discharge housing 183 is provided at the inner end thereof with a cylindrical housing support 1831 into which the inner end of the screw conveyor 188 is rotatably inserted.

The right end of the first discharge housing 185 may be provided with a driving member 188 to rotate the screw conveyors 178 and 188, or the screw conveyors 178 and 188 may be connected to and driven by the motor 141. The discharge housing 189 is positioned below the separating member 189 for injecting the fluid, and is provided with a concave portion facing the separating member 189. The first discharge housing 185 may be a hollow pipe, or may be formed in an annular shape.

The discharge unit 180 is biased from an upper center in a direction opposite to the rotational direction of the first and second juicing members 151 and 155, as illustrated in Fig. 5.

The juiced residues which are attached to the inner surface of the first cylindrical portion 1511 after juicing and rotated together with the first cylindrical portion 1511 are separated from the first cylindrical portion 1511 by the fluid injected from the separating member 189, and then are dropped into the discharge housing 183 of the discharge housing member. The juiced residues are transferred to the outside in the longitudinal direction by the screw conveyor 187 rotating in the discharge housing 183, and then are discharged downwardly through the discharge guide 189 connected to the first discharge housing 185.

Since the juicing machine 100 of the related art is configured in such a way that the circumferential speed of the first juicing member 151 is identical to that of the second juicing member 155, the gap between the first and second juicing members 151 and 155 should be set to be narrow in order to raise the pressure and thus improve the juicing performance. However, there is a problem in that since the thickness of the first juicing member 151 is limited, if the pressure is increased, the first juicing member 151 is deformed.

### [Disclosure]

### [Technical Problem]

Accordingly, the present invention has been made in view of the above-mentioned problems, and an object of the present invention is to provide a high-capacity juicing machine having a simple structure that can improve juicing performance with the same pressure from the thickness of a first juicing member and can easily adjust a circumferential speed of first and second juicing members.

### [Technical Solution]

According to one aspect of the present invention, there is provided a high-capacity juicing machine including: a base; a first support and a second support which are provided on the base and are spaced from each other in a longitudinal direction; a first juicing member having a first support shaft rotatably provided on the first support and an outer hollow rotor which is positioned between the first support and the second support, which is opened toward the second support, which is provided with a plurality of discharge holes, and which is coupled to the first support shaft to rotate together with the first support shaft; a second juicing member having a second support shaft rotatably provided on the second support to be eccentric from the first support shaft, and an inner rotor which is eccentrically positioned inside the first juicing member, and which is coupled to the second support shaft to rotate together with the second support shaft; a first driving member for driving the first support shaft; and a second driving member for driving the second support shaft.

In the above description, the inner rotor is formed in the shape of a cylindrical body, and the inner rotor is provided with a plurality of bosses protruding from an outer peripheral surface thereof.

In the above description, a circumferential speed of the outer rotor is different from a circumferential speed of the inner rotor.

In the above description, the circumferential speed of the inner rotor is faster than the circumferential speed of the outer rotor.

The high-capacity juicing machine further includes a control unit connected to the first and second driving members; an input unit connected to the control unit to input a kind of juicing material; and a storage unit connected to the control unit and stored by a rotational speed database, in which rotational speed values of the first and second support shafts are predetermined according to the kind of the juiced material, wherein if the kind of juiced material is inputted by the input unit, the control unit controls the rotational speeds of the first and second support shafts to operate the support shafts at the predetermined rotational speed values stored in the storage unit according to the inputted kind of juiced material.

The high-capacity juicing machine further includes a control unit connected to the first and second driving members; an input unit connected to the control unit to input a kind of juicing material; a storage unit connected to the control unit and stored by a rotational speed database, in which rotational speed values of the first and second support shafts are predetermined according to the kind of the juiced material; and a display unit connected to the control unit to display the kind of juiced material and the rotational speeds of the first and second support shafts, wherein the input unit inputs the rotational speed values of the first and second support shafts, and if the kind of juiced material is inputted by the input unit, the control unit controls the rotational speeds of the first and second support shafts to operate the support shafts at the inputted rotational speed values.

### [Advantageous Effects]

According to the present invention, the high-capacity juicing machine has the simple structure which is easily manufactured, and improves the juicing performance.

### [Description of Drawings]

Fig. 1 is a perspective view illustrating a juicing machine of the related art.
Fig. 2 is a cross-sectional view schematically illustrating the juicing machine of the related art.
Figs. 3 and 4 are perspective views schematically illustrating the configuration of the juicing machine of the related art.
Fig. 5 is a cross-sectional view taken along the line A-A in Fig. 2.
Fig. 6 is a cross-sectional view illustrating a part of an introducing unit of the juicing machine of the related art.
Fig. 7 is a perspective view schematically illustrating a part of a discharge unit of the juicing machine of the related art.
Fig. 8 is a cross-sectional view illustrating a part of the discharge unit in Fig. 7.
Fig. 9 is a side view schematically illustrating a high-capacity juicing machine according to one embodiment of the present invention.
Fig. 10 is a perspective view schematically illustrating a part of a juicing member of the high-capacity juicing machine according to one embodiment of the present invention.
Fig. 11 is a cross-sectional view illustrating a first juicing member of the high-capacity juicing machine according to one embodiment of the present invention, in which the circle is an enlarged cross-sectional view illustrating a part of the first juicing member.
Fig. 12 is a view schematically illustrating a positional relationship between juicing members of the high-capacity juicing machine according to one embodiment of the present invention.
Fig. 13 is a cross-sectional view illustrating a second juicing member of the high-capacity juicing machine according to one embodiment of the present invention, in which the circle is an enlarged cross-sectional view illustrating a part of the second juicing member is illustrated through.
Fig. 14 is a view schematically illustrating the juicing principle of the high-capacity juicing machine according to one embodiment of the present invention.
Fig. 15 is a view schematically illustrating the high-capacity juicing machine according to one embodiment of the present invention.

### [Mode for Invention]

Hereinafter, a high-capacity juicing machine according to preferred embodiments of the present invention will be described in det ail with reference to the accompanying drawings.

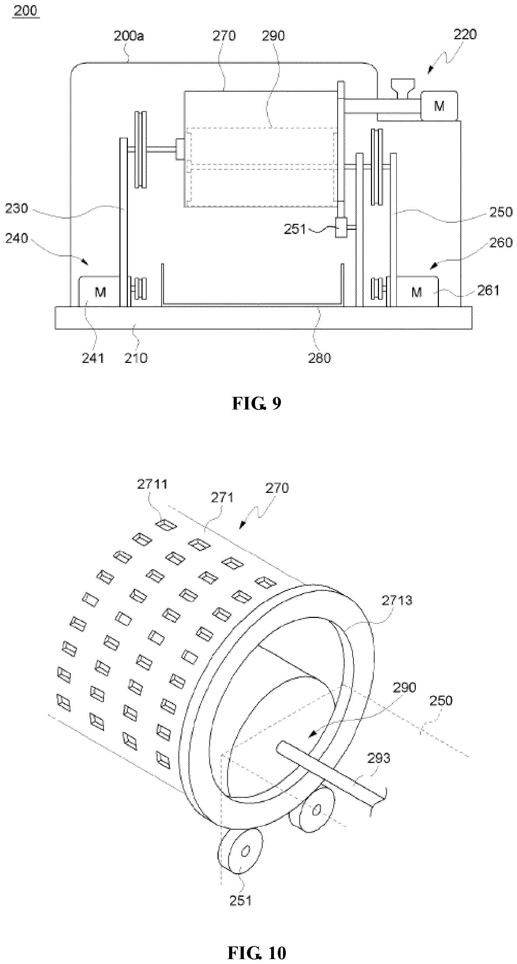

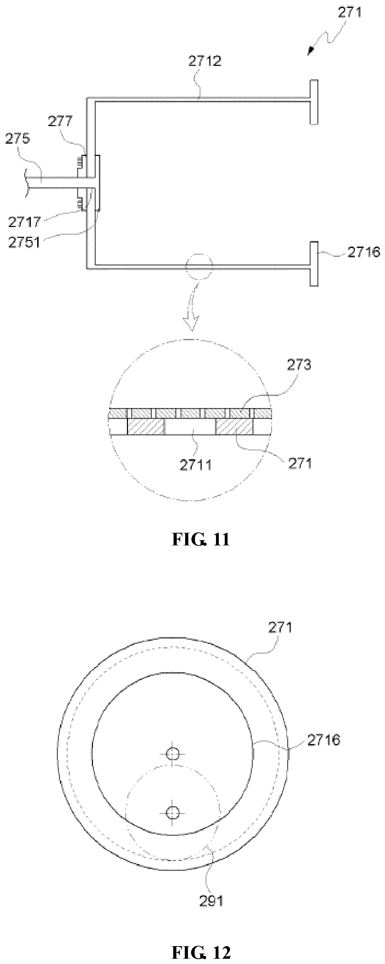

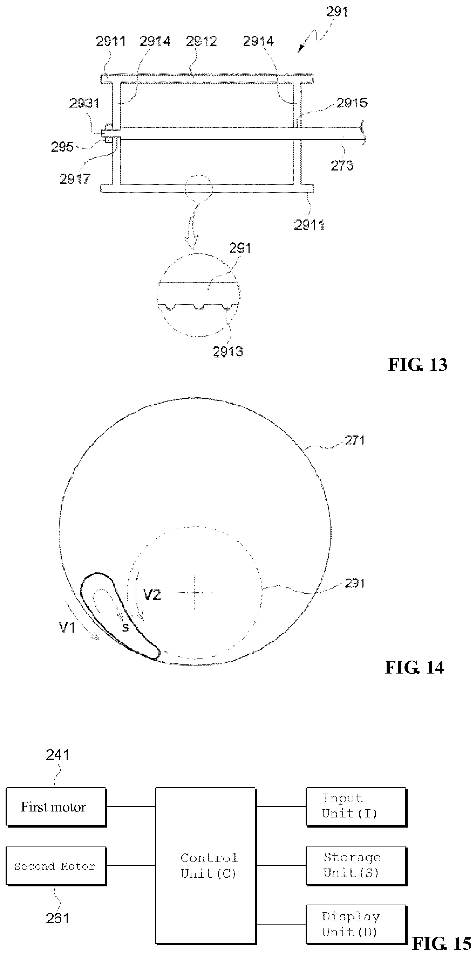

Fig. 9 is a side view schematically illustrating a high-capacity juicing machine according to one embodiment of the present invention. Fig. 10 is a perspective view schematically illustrating a part of a juicing member of the high-capacity juicing machine according to one embodiment of the present invention. Fig. 11 is a cross-sectional view illustrating a first juicing member of the high-capacity juicing machine according to one embodiment of the present invention, in which the circle is an enlarged cross-sectional view illustrating a part of the first juicing member. Fig. 12 is a view schematically illustrating a positional relationship between juicing members of the high-capacity juicing machine according to one embodiment of the present invention. Fig. 13 is a cross-sectional view illustrating a second juicing member of the high-capacity juicing machine according to one embodiment of the present invention, in which the circle is an enlarged cross-sectional view illustrating a part of the second juicing member is illustrated through. Fig. 14 is a view schematically illustrating the juicing principle of the high-capacity juicing machine according to one embodiment of the present invention. Fig. 15 is a view schematically illustrating the high-capacity juicing machine according to one embodiment of the present invention.

In the following description, the term "longitudinal direction" is used to generally describe a direction toward a horizontal direction of Fig. 9, and "width direction" is used to generally describe a vertical direction of Fig. 9. Also, the term "left" is used to generally describe a direction facing a first support 230 in the horizontal direction of Fig. 9, and "right" is used to generally describe a direction facing a second support 250.

As illustrated in Fig. 9, a high-capacity juicing machine according to one embodiment of the present invention includes a base 210, a support member, a first juicing member 270, a second juicing member 290, an introducing unit 220, a discharge unit (not illustrated), a driving unit, and a collecting container 280. Parts of the above components are housed within a housing 200a.

The base 210 serves as a support of the high-capacity juicing machine 200. The base 210 is provided on an upper portion thereof with the support member, a first motor 241 and a second motor 261 for the driving unit, and the collecting container 280.

The support member has a first support 230 and a second support 250 which are spaced apart from each other on the base 210 in a longitudinal direction and are fixed thereto. Specifically, the first support 230 is installed to one side of the base, while the second support 250 is installed to the other side.

The first support 230 has a plurality of plate members which are connected to each other. The first support 230 rotatably supports a first support shaft 275 of the first juicing member 270 via a bearing which is installed in a hole penetrating the first support in the longitudinal direction. A first driving member 240 is interposed between the plate members of the first support 230.

The second support 250 has a plurality of plate members which are connected to each other. The second support 250 rotatably supports a second support shaft 293 of the second juicing member 290 via a bearing which is installed in a hole penetrating an upper portion of the second support in the longitudinal direction. A second driving member 260 is interposed between the plate members of the second support 250. The first support 230 and the second support 250 may be made of single plate member.

The second support 250 is provided with at least one support roller 251. The support roller 251 is rotatably installed to the second support 250 via a bearing. The support roller 251 is positioned below an opening of the first juicing member 270. The support roller 251 is spaced apart from the first juicing member 270 in a circumferential direction. The support roller 251 is to support the first juicing member 270.

As illustrated in Figs. 9 to 11, the first juicing member 270 is rotatably engaged to the first support 230. The first juicing member 270 has an outer rotor 271, an inner screen 273, the first support shaft 275, and a reinforcing member 277.

The outer rotor 271 is interposed between the first support 230 and the second support 250. The outer rotor 271 has a first hollow cylindrical portion 2712 with a circular cross section, and a first disc 2714 which is formed in the shape of a circular plate and is engaged to a left end of the first cylindrical portion 2712. The outer rotor 271 is opened toward the second support.

An outer annular flange 2416 is engaged to the opened end of the first cylindrical portion 2712. The outer flange 2416 protrudes radially from the opened end of the first cylindrical portion 2712. And outer end face of the outer flange 2416 comes into contact with the support roller 251. The outer flange 2416 prevents extraction from leaking to the opened end of the first cylindrical portion 2712.

The first cylindrical portion 2712 of the outer rotor 271 is provided with a plurality of discharge holes 2711. The discharge holes 2711 are formed to radially penetrate a circumferential surface of the first cylindrical portion 2712. The discharge holes 2711 are spaced apart from each other in a longitudinal direction and a circumferential direction.

The first disc 2714 of the outer rotor 271 is provided with a first shaft opening 2717. The first shaft opening 2717 is positioned at the center of the first disc 2714, and penetrates the first disc in the longitudinal direction. The first support shaft 275 is inserted into the first shaft opening 2717.

The inner screen 273 is provided on the inner surface of the outer rotor 271. The inner screen 273 is fixed to the inner surface of the outer rotor 271 to rotate together with the outer rotor 271. The inner screen 273 is a mesh provided with a plurality of fine holes. The fine holes of the inner screen 273 are formed to be smaller than the size of the discharge holes 2711. The extraction is discharged through the fine holes, and the juiced residues are left in the inner screen 273.

The first support shaft 275 extends in the longitudinal direction. One end of the first support shaft 275 is rotatably supported by the first support 230 via a bearing, while the other end is inserted into the first shaft opening 2717 of the outer rotor 271, and is engaged to the first disc 2714. The first support shaft 275 is installed at the center of the first disc 2714, and is positioned in parallel with the first cylindrical portion 2712. Accordingly, the first support shaft 275 serves as a center axis of the outer rotor to become a center of rotation.

The right end of the first support shaft 275 is provided with an engaging portion 2751 extending outwardly in a radial direction. The engaging portion 2751 has an area larger than that of the first shaft opening 2717. The first support shaft 275 is not separated from the outer rotor 271 by the engaging portion 2751.

The reinforcing member 277 is formed in the shape of an annular plate. The reinforcing member 277 is positioned in such a way that the center of the reinforcing member coincides with the axis of the first support shaft 275. The first support shaft 275 penetrates the center of the reinforcing member 277. The reinforcing member 277 is fixed to the outer surface of the first disc 2714 by screws. The first support shaft 275 penetrating the reinforcing member 277 is fixed to the reinforcing member 277 by welding. The first support shaft 275 is fixed to the outer rotor 271 by the reinforcing member 277 to rotate together with the outer rotor 271.

As illustrated in Figs. 12 and 13, the second juicing member 290 has an inner rotor 291, a second support shaft 293 and a fixing member 295.

The inner rotor 291 has a second hollow cylindrical portion 2912 with a circular cross section, and second discs 2914 which are provided to both sides of the second cylindrical portion 2912 and are formed in the shape of a circular plate. The inner rotor 291 has an outer diameter smaller than an inner diameter of the outer rotor 271 so that the inner rotor is positioned in the outer rotor 271. The inner rotor 291 is positioned in parallel with the outer rotor 271.

The second disc 2914 of the inner rotor 291 is spaced apart from an end of the second cylindrical portion 2912 in the longitudinal direction. The second cylindrical portion 2912 has a protrusion 2911 protruding outwardly from the second disc 2914 in the longitudinal direction. The protrusion 2911 protrudes over the end of the second support shaft 293 which is fastened to the second disc 2914, in the longitudinal direction, so that the protrusion comes into contact with the inside of the first disc 2714 of the outer rotor 271 or a small gap is formed between the protrusion and the first disc 2714. Accordingly, the extraction is easily guided to the small gap formed between the outer rotor 271 and the inner rotor 291 by the protrusion 2911, so that the juiced material is effectively extracted.

The inner rotor 291 is provided in the outer rotor 271 so that the inner rotor is eccentrical to the outer rotor 271 by the second support shaft 293 which is eccentrical to the first support shaft 275. The center of the inner rotor 291 is downwardly eccentrical to the center of the outer rotor 271.

The second cylindrical portion 2912 of the inner rotor 291 is provided with a plurality of bosses 2913. The bosses 2913 protrude outwardly from the outer peripheral surface of the second cylindrical portion 2912 in the radial direction. The bosses 2913 are spaced apart from each other in the longitudinal direction and the circumferential direction. Since sliding movement between the outer rotor 271 and the inner rotor 291 is prevented by the bosses 2913, the extraction is easily guided to the small gap between the outer rotor 271 and the inner rotor 291.

The second disc 2914 installed to the right end of the second cylindrical portion 2912 is provided with a through-hole 2915 at the center thereof. The second support shaft 293 which is the rotational shaft of the inner rotor 291 is inserted into the through-hole 2915.

The second disc 2914 installed to the left end of the second cylindrical portion 2912 is provided with a receiving hole 2917 at the center thereof which penetrates the second disc in the longitudinal direction. The receiving hole 2917 has a diameter smaller than that of the through-hole 2915. The second support shaft 293 which is the rotational shaft of the inner rotor 291 is inserted into the receiving hole 2917.

The second support shaft 293 extends in the longitudinal direction. One end of the second support shaft 293 is rotatably installed to the second support 250 via a bearing, while the other end is inserted into the receiving hole 2917 through the through-hole 2915, and then is engaged to the second disc 2914 of the inner rotor 291. The second support shaft 293 is fixed to the inner rotor 291, so that the inner rotor 291 is rotated integrally with the second support shaft 293.

The second support shaft 293 serves as a center shaft of the inner rotor 291, and thus becomes a center of rotation. The second support shaft 293 is downwardly eccentrical to the first support shaft 275, and is positioned in parallel with the first support shaft 275.

The left end of the second support shaft 293 is provided with an insertion portion 2931 having a stepped portion. The insertion portion 2931 has a diameter smaller than that of the right end of the second support shaft 293. The insertion portion 2931 is inserted into the receiving hole 2917 formed in the inner rotor 291, and then protrudes from the outer surface of the second disc 2914. The end of the insertion portion 2931 is positioned at a position inwardly away from the end of the protrusion 2911 in the longitudinal direction. The fixing member 295 is installed to the insertion portion 2931 protruding from the outer surface of the second disc 2914.

The fixing member 295 has a nut, and is fastened to a threaded portion which is formed on the outer peripheral surface of the insertion portion 2917. Therefore, the second support shaft 293 is prevented from being released from the inner rotor 291 in the longitudinal direction.

As illustrated in Fig. 9, the configuration of the introducing unit 220 and the discharge unit (not illustrated) is substantially identical to that of the juicing machine according to the related art, and thus the detailed description thereof will be omitted herein.

The collection container 280 is provided on the base 210. The collection container 280 is spaced apart from the first juicing member 270 in the width direction. The collection container 280 is a hollow body opened toward the first juicing member 270. The collection container 280 is formed to be larger than or equal to the longitudinal length of the first juicing member 270. The collection container 280 is able to come in or out from the opening formed in the housing 200a.

The driving unit has the first driving member 240 connected to the first support shaft 275, and the second driving member 260 connected to the second shaft 293.

The first driving member 240 is provided on the first support 230. The first driving member 240 has a first motor 241, pulleys and a belt. The first motor 241 is provided on the base 210, and is spaced apart from the first support shaft 275 in the width direction. The pulleys are fixed to the first motor 241 and the first support shaft 275.

The second driving member 260 is provided on the second support 250. The second driving member 260 is connected to the second support shaft 293 of the second juicing member 290, and has a second motor 261, pulleys and a belt. The second motor 261 is provided on the base 210, and is spaced apart from the second support shaft 293 in the width direction. The pulleys are fixed to the second motor 261 and the second support shaft 293.

As illustrated in Fig. 14, the first support shaft 275 and the second support shaft 293 are rotated by the driving unit to rotate the outer rotor 271 and the inner rotor 291.

The juiced material is introduced into the big gap formed between the outer rotor 271 and the inner rotor 291, and then is guided to the small gap by the gravity and the outer rotor 271 and the inner rotor 291 which rotated in a direction indicated by the arrow in Fig. 14, so that the juiced material is pressed and extracted between the inner surface of the outer rotor 271 and the outer surface of the inner rotor 291.

The first driving member 240 is connected to the first support shaft 275, and the second driving member 260 is connected to the second support shaft 293, so that a circumferential speed V1 of the outer rotor 271 is different from a circumferential speed V2 of the inner rotor 291. Since the circumferential speeds of the outer rotor 271 and the inner rotor 291 are different from each other, the juiced material is extracted while being rotated.

If the circumferential speed V1 of the outer rotor 271 is set to be faster than the circumferential speed V2 of the inner rotor 291, the juiced material is rotated in the same rotational direction as that of the outer rotor 271 and the inner rotor 291. If the circumferential speed V1 of the outer rotor 271 is set to be slower than the circumferential speed V2 of the inner rotor 291, the juiced material is rotated in a direction opposite to the rotational direction of the outer rotor 271 and the inner rotor 291. Accordingly, the juiced material is extracted while revolving and rotating, thereby improving juicing performance, as compared to the case where the juiced material is extracted at the same circumferential speed.

According to some tests, in case where the circumferential speed V2 of the inner rotor 291 is set to be fast, the juicing performance is further improved, as compared to the case where the circumferential speed V1 of the outer rotor 271 is set to be fast.

As illustrated in Fig. 15, the high-capacity juicing machine 200 further includes a control unit C connected to the first and second driving members 240 and 260, an input unit I connected to the control unit C to input a kind of juicing material, a storage unit S connected to the control unit C and stored by a rotational speed database, in which rotational speed values of the first and second support shafts 275 and 293 are predetermined according to the kind of the juiced material, and a display unit D connected to the control unit C to display the rotational speeds of the first and second support shafts 275 and 293.

The control unit C is connected to the first motor 241 of the first driving member 240 and the second motor 261 of the second driving member 260 to control the rotational speeds of the first and second support shafts 275 and 293.

The input unit I is provided to input the kind of juiced material or input the rotational speed values of the first and second support shafts 275 and 293.

According to the method of operating the control unit C, if the kind of juiced material is inputted by the input unit I, the rotational speed values of the first and second support shafts 275 and 293 are set from the rotational speed database stored in the storage unit S according to the inputted kind of juiced material. The control unit C controls the rotational speeds of the first and second support shafts 275 and 293 to operate the support shafts at the predetermined rotational speed values stored in the storage unit S.

The rotational speed values of the first and second support shafts 275 and 293 are directly inputted through the input unit I, and the control unit C controls the rotational speeds of the first and second support shafts 275 and 293 so that the first and second support shafts 275 and 293 are rotated at the inputted rotational speeds.

Accordingly, the control unit C controls the rotational speeds of the first and second support shafts 275 and 293 according to the kind of juiced material which is inputted through the input unit I, or controls the rotational speeds of the first and second support shafts 275 and 293 at the inputted rotational speed values of the first and second support shafts 275 and 293.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### Industrial Applicability

According to the present invention, the high-capacity juicing machine has the simple structure which is easily manufactured, and improves the juicing performance with the same pressure from the thickness of the first juicing member, thereby effectively extracting the juiced material.

## Claims

1. A high-capacity juicing machine comprising:
a base (210);
a first support (230) and a second support (250) which are provided on the base (210) and are spaced from each other in a longitudinal direction;
a first juicing member (270) having a first support shaft (275) rotatably provided on the first support (230) and an outer hollow rotor (271) which is positioned between the first support (230) and the second support (250), which is opened toward the second support (250), which is provided with a plurality of discharge holes (2711), and which is coupled to the first support shaft (275) to rotate together with the first support shaft;
a second juicing member (290) having a second support shaft (293) rotatably provided on the second support (250) to be eccentric from the first support shaft (275), and an inner rotor (291) which is eccentrically positioned inside the first juicing member (270), and which is coupled to the second support shaft (293) to rotate together with the second support shaft;
a first driving member (240) for driving the first support shaft (275); and
a second driving member (260) for driving the second support shaft (293).

2. The high-capacity juicing machine according to claim 1, wherein the inner rotor (291) is formed in a shape of a cylindrical body, and the inner rotor (291) is provided with a plurality of bosses (2913) protruding from an outer peripheral surface thereof.

3. The high-capacity juicing machine according to claim 1 or 2, wherein a circumferential speed (VI) of the outer rotor (271) is different from a circumferential speed (V2) of the inner rotor (291).

4. The high-capacity juicing machine according to claim 3, wherein the circumferential speed (V2) of the inner rotor (291) is faster than the circumferential speed (VI) of the outer rotor (271).

5. The high-capacity juicing machine according to claim 1 or 2, further comprising
a control unit (C) connected to the first and second driving members (240 and 260);
an input unit (I) connected to the control unit (C) to input a kind of juicing material; and
a storage unit (S) connected to the control unit (C) and stored by a rotational speed database, in which rotational speed values of the first and second support shafts (275 and 293) are predetermined according to the kind of the juiced material, wherein
if the kind of juiced material is inputted by the input unit (I), the control unit (C) controls the rotational speeds of the first and second support shafts (275 and 293) to operate the support shafts at the predetermined rotational speed values stored in the storage unit (S) according to the inputted kind of juiced material.

6. The high-capacity juicing machine according to claim 1 or 2,
further comprising
a control unit (C) connected to the first and second driving members (240 and 260);
an input unit (I) connected to the control unit (C) to input a kind of juicing material;
a storage unit (S) connected to the control unit (C) and stored by a rotational speed database, in which rotational speed values of the first and second support shafts (275 and 293) are predetermined according to the kind of the juiced material; and
a display unit (D) connected to the control unit (C) to display the kind of juiced material and the rotational speeds of the first and second support shafts (275 and 293), wherein
the input unit (I) inputs the rotational speed values of the first and second support shafts (275 and 293), and
if the kind of juiced material is inputted by the input unit (I), the control unit (C) controls the rotational speeds of the first and second support shafts (275 and 293) to operate the support shafts (275 and 293) at the inputted rotational speed values.
